# EUROPÄISCHE PATENTSCHRIFT

(11) **EP 0 517 166 B1**
(45) Veröffentlichungstag und Bekanntmachung des Hinweises auf die Patenterteilung: **12.04.1995**
(21) Anmeldenummer: 92109298.7
(22) Anmeldetag: 02.06.1992
(51) Int. Cl.: B62B 3/10, B65F 1/14

(54) **Müllcontainer**
Rubbisch container
Récipient pour déchets

(30) Priorität: 06.06.1991 DE 4118622
(43) Veröffentlichungstag der Anmeldung: 09.12.1992
(73) Patentinhaber: TechniMed AG, 4011 Basel (CH)
(72) Erfinder: Piwonka, Peter, W-8000 München 71 (DE)
(74) Vertreter: Alber, Norbert

(56) Entgegenhaltungen:
- DE-A- 2 703 515
- US-A- 1 475 483
- US-A- 3 696 938
- US-A- 4 066 172
- US-A- 4 860 909

## Beschreibung

Die Erfindung betrifft einen fahrbaren Müllcontainer entsprechend dem Oberbegriff des Anspruchs 1.

Ein derartiger Behälter ist aus der US-PS 4,984,704 bekannt. Bei diesem Container ist für jeden Müllbehälter eine schwenkbare Aufhängevorrichtung vorgesehen, so daß die Müllbehälter je nach Gebrauchslage eine vertikale oder eine dazu geneigte Stellung einnehmen können. Zum Entleeren werden die Müllbehälter aus dieser Aufhängevorrichtung herausgehoben.

Aus der DE-AS 11 68 334 bzw. der DE-Z "Die Städtereinigung", 30.03.1940, S. 35-55, sind automatische Reinigungsanlagen für Müllbehälter bekannt, in die die Müllbehälter eingesetzt und zum bzw. nach dem Entleeren in umgekehrter Stellung gereinigt werden.

Der Erfindung liegt die Aufgabe zugrunde, einen Müllcontainer zu schaffen, der in einfacher Weise gleichzeitig zusammen mit den Müllbehältern gereinigt werden kann.

Gelöst wird diese Aufgabe der Erfindung durch die im kennzeichnenden Teil des Anspruchs 1 angegebenen Merkmale. Zweckmäßige Ausgestaltungen der Erfindung ergeben sich aus den Unteransprüchen.

Durch die Ausgestaltung des Fahrgestells in Form von offenen Rahmen und die Möglichkeit, die Müllbehälter mit ihrer Einfüllöffnung nach unten gerichtet anzuordnen, kann der Müllbehälter gleichzeitig eine Waschanlage durchlaufen, in der üblicherweise von der Seite und von unten gerichtete Wasserstrahlen eine Reinigung bewirken, ohne daß Rückstände in den Rahmen oder den Behältern verbleiben.

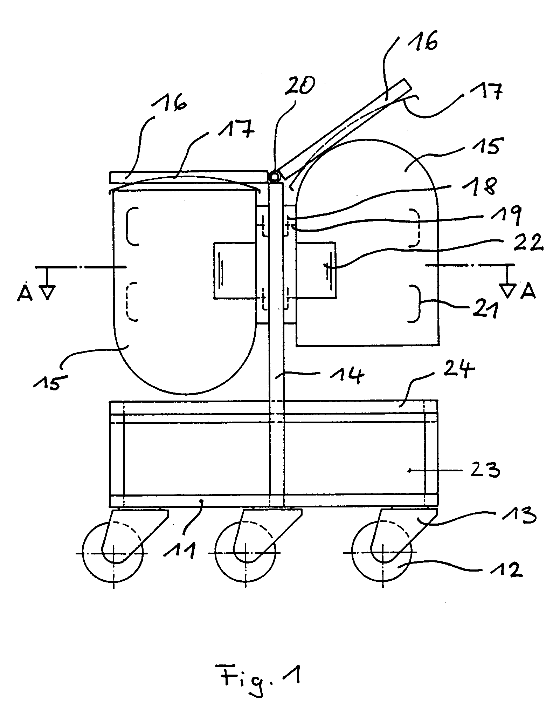

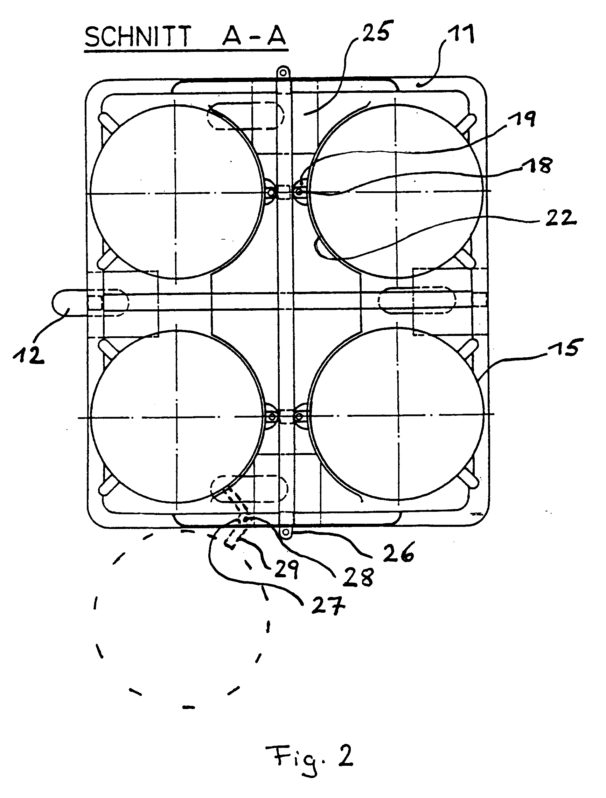

Die Erfindung wird nachstehend anhand der Fig. 1 und 2 beispielsweise erläutert. Es zeigt:
Fig. 1 eine Seitenansicht eines Müllcontainers gemäß der Erfindung und
Fig. 2 einen Schnitt längs der Linie A-A in Fig. 1, wobei gleichzeitig eine weitere Ausführungsform schematisch gezeigt ist.

Der Müllcontainer der Fig. 1 hat ein Fahrgestell in Form eines offenen Grundrahmens 11 an dem mittels Halterungen 13 und Bodenblechen 25 Rollen 12 sitzen. Mehrere solcher Fahrgestelle sind über Ösen 26 kuppelbar.Der Grundrahmen 11 besteht, wie Fig. 2 zeigt, aus einem rechteckigen Gestell mit mittleren Querstreben. Auf dem Grundrahmen 11 ist mittig ein Aufbau ebenfalls in Form eines offen Rahmens 14 angeordnet, der aus vier vertikalen Streben und einer oberen Verbindungsstrebe besteht. An zwei vertikalen Streben sind beidseitig zwei Handgriffe 21 aufweisende Müllbehälter 15 angeordnet. Hierfür sind an den Streben Zapfen 18 und an den Behältern 15 Ösen 19 vorgesehen. Um das Einsetzen der Behälter 15 zu erleichtern, sitzen an den vertikalen Streben zusätzlich Führungsbleche 22. Oben weist der Aufbau schwenkbare Deckel 16 auf, an deren Unterseite sich zusätzliche Deckel 17 befinden, die die Behälter genau abschließen.

Unterhalb der Behälter sind in einem ebenfalls offenen Rahmen 24 seitliche in Fig. 1 herausziehbare Schubfächer 23 angeordnet.

Fig. 1 zeigt einen der Behälter 15 in der Reinigungsstellung mit der Einfüllöffnung nach unten gerichtet.

In Fig. 2 ist eine weitere Ausführungsform schematisch angedeutet. Anstelle der Schubfächer 23 können jeweils zwei Behälter 15 übereinander angeordnet sein. Die unteren Behälter haben jeweils eine Halterung 29 mit einer an beiden Enden offenen Hülse 27, mit der eine schwenkbare Lagerung auf einem Zapfen 28 ermöglicht wird, der am Grundrahmen 11 sitzt. Damit können diese Behälter in die gestrichelt gezeigte Stellung geschwenkt werden, in der sie beladen, aber auch in umgekehrter Stellung gereinigt werden können.

Insbesondere Fig. 2 zeigt, daß der gesamte Container in vertikaler Richtung weitgehend durchlässig und damit zur Reinigung von unten geeignet ist.

## Patentansprüche

1. Fahrbarer Müllcontainer, insbesondere für Krankenhäuser, mit einem Fahrgestell und einem Aufbau, in dem einzlene, herausnehmbare Müllbehälter angeordnet sind, wobei das Fahrgestell und der Aufbau jeweils aus einem offenen Rahmen bestehen,
**gekennzeichnet durch**
eine Aufhängevorrichtung für die Müllbehälter (15) am Rahmen (14) des Aufbaus, der so ausgebildet ist, daß die Müllbehälter (15) auch mit nach unten gerichteter Öffnung in den Rahmen (14) einhängbar sind.

2. Müllcontainer nach Anspruch 1,
**dadurch gekennzeichnet,** daß
wenigstens zwei Müllbehälter (15) übereinander angeordnet sind, und daß der jeweils untere Müllbehälter nach außen schwenkbar gelagert ist.

3. Müllcontainer nach Anspruch 2,
**dadurch gekennzeichnet,** daß
auch die unteren Müllbehälter (15) in ihrer nach außen geschwenkten Lage in umgekehrter Stellung einhängbar sind.

4. Müllcontainer nach Anspruch 1,
**gekennzeichnet durch**
unterhalb der Müllbehälter (15) auf dem Fahrgestellrahmen (11) angeordnete Schubfächer (23).

5. Müllcontainer nach Anspruch 1,
**gekennzeichnet durch**
am Aufbaurahmen (14) schwenkbar gelagerte Deckel (16).

## Claims

1. Wheeled garbage container especially for hospitals having a chassis and a structure in which separate, removable garbage receptacles are arranged each chassis and each structure comprising an open frame,
characterized by
a suspension means for the garbage receptacles (15) on the frame (14) of the structure adapted in such a manner that the garbage receptacles (15) are also suspensable in the frame (14) having the opening directed downwardly.

2. Wheeled garbage container according to claim 1
characterized in that
at least two stacked garbage receptacles (15) are provided and that each lower garbage receptacle is outwardly pivoted.

3. Wheeled garbage container according to claim 2
characterized in that
also the lower garbage receptacles (15) are suspensable in the outwardly pivoted position.

4. Wheeled garbage container according to claim 1
characterized by
drawers (23) mounted below the garbage receptacles (15) on the frame (11) of the chassis.

5. Wheeled garbage container according to claim 1
characterized by
a cover (16) pivotably mounted onto the frame (14) of the structure.

## Revendications

1. Conteneur à ordures mobile, en particulier pour hôpitaux, comprenant un châssis roulant et une superstructure, dans laquelle sont disposés des récipients à ordures individuels amovibles, le châssis roulant et la superstructure étant composés chacun d'un cadre ouvert,
caractérisé par
un dispositif de suspension pour les récipients à ordures (15) prévu sur le cadre (14) de la superstructure, lequel est constitué de manière que les récipients à ordures (15) puissent aussi être suspendus dans le cadre (14) avec leur ouverture dirigée vers le bas.

2. Conteneur à ordures selon la revendication 1,
caractérisé
en ce qu'au moins deux récipients à ordures (15) sont disposés l'un au-dessus de l'autre et en ce que le récipient à ordures inférieur est tourillonné pour pouvoir être amené à l'extérieur par pivotement.

3. Conteneur à ordures selon la revendication 2,
caractérisé
en ce que les récipients à ordures inférieurs (15) peuvent aussi être suspendus dans la position retournée dans un emplacement déporté vers l'extérieur par pivotement.

4. Conteneur à ordures selon la revendication 1,
caractérisé
par des tiroirs (23) disposés sur le cadre (11) du châssis roulant, au-dessous des récipients à ordures (15).

5. Conteneur à ordures selon la revendication 1,
caractérisé
par des couvercles (16) montés oscillants sur le cadre (14) de la superstructure.
